(19) Europäisches Patentamt / European Patent Office / Office européen des brevets

(11) **EP 4 474 445 A1**

(12) **EUROPEAN PATENT APPLICATION**

(43) Date of publication:
**11.12.2024 Bulletin 2024/50**

(21) Application number: **23178014.9**

(22) Date of filing: **07.06.2023**

(51) International Patent Classification (IPC):
*C09K 8/035* $^{(2006.01)}$   *C09K 8/528* $^{(2006.01)}$

(52) Cooperative Patent Classification (CPC):
**C09K 8/035; C07G 1/00; C09K 8/528**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borregaard AS**
**1721 Sarpsborg (NO)**

(72) Inventor: **The designation of the inventor has not yet been filed**

(74) Representative: **Tostmann, Holger Carl**
**Wallinger Ricker Schlotter Tostmann**
**Patent- und Rechtsanwälte Partnerschaft mbB**
**Zweibrückenstrasse 5-7**
**80331 München (DE)**

(54) **SULFONATED LIGNINS FOR SCALE INHIBITION**

(57)    The present invention relates to an oxidized sulfonated lignin scale inhibitor, the use thereof for inhibiting the formation of scale in oilfield applications, a method for inhibiting scale in oilfield applications, and a method for preparing the inventive oxidized sulfonated lignin scale inhibitor.

EP 4 474 445 A1

**Description**

**FIELD OF THE INVENTION**

The present invention relates to an oxidized sulfonated lignin scale inhibitor, the use thereof for inhibiting the formation of scale in oilfield applications, a method for inhibiting scale in oilfield applications, and a method for preparing the inventive oxidized sulfonated lignin scale inhibitor.

**BACKGROUND OF THE INVENTION**

Scale formation is a significant challenge faced by the oil and gas industry. When certain minerals, such as calcium carbonate, calcium sulfate, or barium sulfate, exceed their solubility limits, they can precipitate and form scale deposits. These scales can accumulate on the surfaces of production equipment, wellbores, and reservoir formations, leading to reduced production rates, decreased efficiency, and equipment damage.

Various approaches have been employed to address the issue of scale formation in the oil and gas industry. Traditional methods involve reactive measures, such as the use of acid treatments or mechanical interventions to remove or dissolve scale deposits. However, these methods are often costly, time-consuming, and can result in production disruptions and environmental concerns.

Another approach for managing scale formation in the oil and gas industry is the proactive use of scale inhibitors. For example, scale inhibitors can be added into the production fluids or the drilling muds, resulting in enhanced production rates, extended equipment lifespan, and improved operational efficiency.

In the oil and gas industry, however, very large volumes of liquids are discharged into the environment. Further, challenging conditions, such as concentrated brines and high temperatures and/or pressures, are usually present in the oil and gas industry, in particular in oilfield applications.

Thus, in the oil and gas industry, scale inhibitors that are highly efficient (i.e. functional at very low doses) under challenging conditions (high temperatures and/or pressures; concentrated brines) are required and sought-after.

Further, due to the environmental risk of oil- and gasfield activities, the use of scale inhibitors is under increasingly stringent regulation. In sensitive areas such as the North Sea, only PLONOR-registered scale inhibitors are permitted. The PLONOR list is a compilation of chemicals the OSPAR commission considers pose little or no risk to the environment, providing a regulatory framework for water treatment additives in the oil and gas industry. In addition to new environmental regulations, there is also a general trend in the industry away from petroleum-based raw materials towards renewable feedstocks.

Commonly used scale inhibitors are, for example, anionic polymers (e.g. polyacrylate, polyvinyl sulfonate) or organophosphonate molecules (e.g. 1-hydroxy ethylidene-1 ,1-diphosphonic acid). Such compounds, however, are fossil-based, environmentally unfriendly, and not considered PLONOR acceptable. Thus, the scale inhibitors commonly used in oil- and gasfields are more and more undesirable.

Another class of compounds that has been envisaged as a scale inhibitor in the past are lignin-based materials. For example, US 2,297,670 describes the use of lignin materials for protecting boilers against embrittlement and, as a side-aspect, for preventing the adherence of boiler scales. Further, US 3,849,328 mentions the use of sulfonated alkali lignins for inhibiting the build-up of mineral scale deposits from scale prone waters. US 3,849,328, however, teaches that sulfite lignins do not impart unusual scale-inhibiting properties and, thus, teaches against using this class of compounds. US 2,505,457 discloses the use of lignin derivatives prepared by heating sodium lignosulfonate in the presence of caustic soda for inhibiting scale in evaporators, feed water heaters, economizers, boilers, and other steam generating systems. However, the lignin derivative of US 2,505,457 has a very low performance and does not perform well enough for commercial use. Finally, lignosulfonate has been mixed or grafted with synthetic moieties known to inhibit scale, for example acrylic acid and polyacrylate (see US 2013/0137799 and Ind. Eng. Chem. Res. 2006, 45, 16, 5716-5721). However, it is doubtful whether such complex mixtures of petroleum-based and lignosulfonate-based materials qualify as PLONOR-acceptable. Further, these compounds are associated with rather high production costs, which make them economically unsuitable for commercial large-scale applications, such as in the oil and gas industry.

Hence, new scale inhibitors that meet the following requirements are highly sought after:

- Environmentally benign and PLONOR-registered
- Tolerant to high temperatures and pressures
- Tolerant to high calcium salt brines
- High efficiency, i.e. perform at least as good as existing technologies
- Easy to handle and deploy (i.e. in a pumpable concentrated liquid form)
- Cost-effective and available in large volumes
- Based on renewable raw materials.

## SUMMARY OF THE PRESENT INVENTION

It is an object of the present invention to achieve all or some of the above-mentioned purposes.

In particular, it is an object of the present invention to provide for novel scale inhibitors that are suitable for use in the oil and gas industry and that meet the above-mentioned requirements. In particular, it is an object of the present invention to provide for scale inhibitors that are highly efficient under the extreme conditions present in the oil and gas industry, and that are environmentally benign.

The performance/efficiency of scale inhibitors is typically expressed as the fail inhibitor concentration (FIC). This is the concentration of inhibitor at which the onset of scale is detected (FIC). A lower FIC value indicates a better performing scale inhibitor. Commonly used scale inhibitors typically have a FIC value of about 10 ppm or less, depending on how aggressive the scaling conditions are, and it is desirable that the novel scale inhibitors have about the same efficiency.

These and other objects have been achieved by the novel scale inhibitors of the present invention, which are based on the biomolecule lignin, in particular on sulfonated lignin.

Sulfonated lignins, in particular lignosulfonates, are known dispersants in the oil industry, used to thin drilling muds. Lignosulfonates are PLONOR-registered, biobased, and available in large volumes in concentrated liquid form. However, as it has already been realized in US 3,849,328, due to a rather low performance, currently available lignin materials, in particular common sulfonated lignins such as lignosulfonate obtained from sulfite pulping, are not suitable as scale inhibitors.

However, through extensive research, the inventors of the present invention have found that sulfonated lignins can be converted into highly efficient scale inhibitors by providing for a certain amount of -COOH groups and methoxy groups. Specifically, it has been found that the amount of -COOH groups should be above 4 wt.% and, at the same time, the amount of methoxy groups should be below 6 wt.%, both based on the total weight of the lignin material. The required amounts of -COOH and methoxy groups can be provided for by oxidizing a sulfonated lignin.

Such highly oxidized sulfonated lignins have not been known before the present invention was made, let alone their high efficiency for inhibiting scale under extreme conditions. For example, the sulfonated lignin derivative disclosed in WO 2021/165298 has an amount of only 3 wt.% of -COOH groups and, thus, shows insufficient scale inhibiting properties (FIC of about 50 ppm; see Table 6).

Accordingly, in a *first aspect,* the present invention relates to an oxidized sulfonated lignin scale inhibitor, characterized by a -COOH group content of more than 4.0 wt.%, based on the total weight of the oxidized sulfonated lignin, and a methoxy group content of less than 6.0 wt.%, based on the total weight of the oxidized sulfonated lignin.

In a *second aspect,* the present invention relates to the use of the oxidized sulfonated lignin scale inhibitor of the present invention for inhibiting the formation of scale in oilfield applications.

In a *third aspect,* the present invention relates to a method for inhibiting the formation of scale in oilfield applications.

In a *fourth aspect,* the present invention relates to a method for preparing the oxidized sulfonated lignin scale inhibitor of the present invention.

## DETAILED DESCRIPTION OF THE INVENTION

As noted above, the present invention is based on the surprising finding that sulfonated lignins, in particular lignosulfonates, can be used as efficient scale inhibitors if certain amounts of -COOH groups and methoxy groups, in combination, are provided for. Specifically, it has been found that the amount of -COOH groups should be above 4 wt.% and, at the same time, the amount of methoxy groups should be below 6 wt.%, both based on the total weight of the modified lignin.

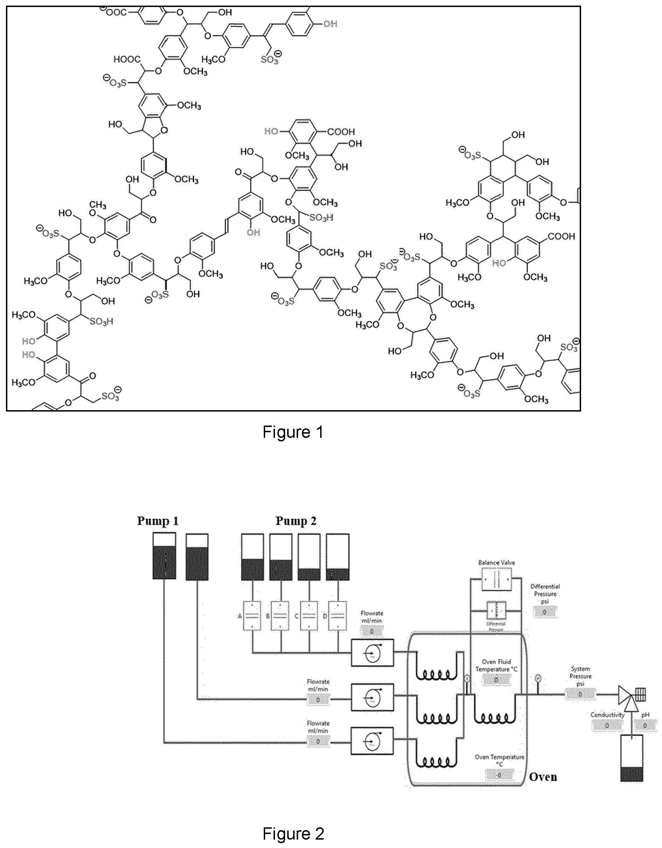

Lignosulfonates are traditionally produced via "sulfite pulping" of wood and other plant biomass. This "pulping" is typically achieved by extracting lignin from lignocellulosic biomass in large pressure vessels called digesters by using various salts of sulfurous acid. During sulfite pulping, lignin molecules are sulfonated and thereby rendered negatively charged and water-soluble. A representative depiction of a lignosulfonate as obtained from sulfite pulping is shown in Figure 1. Another common route to sulfonated lignins is the sulfonation of lignin that has already been extracted from the biomass via other processes, such as Kraft or OrganoSolv lignins. Direct sulfonation of extracted lignins can be achieved via sulfite pulping or other reactions known in the art to introduce sulfonate groups such as sulfomethylation.

Depending on the pulping reaction conditions, feed material, and post processing, the sulfonated lignin polymer can be designed to have varying structures and chemical functionalities, such as molecular weight, degree of sulfonation, degree of conjugation, density of -COOH groups, phenolic groups, methoxy groups, etc. Sulfonated lignin therefore represents a highly diverse class of material that chiefly involves lignin extracted from biomass that has been functionalized with sulfonate charged groups.

In the present invention, the high amount of -COOH groups is introduced via oxidation (preferably a multi-step oxidation process) of a sulfonated lignin. The oxidation must be performed in a way that the desired amounts of -COOH and methoxy groups are achieved; not every oxidation of a sulfonated lignin material results in the advantageous oxidized sulfonated lignin of the present invention. During the oxidation, a decomposition of the lignin derivative into smaller fragments is preferably avoided. An exemplary method for preparing the inventive oxidized sulfonated lignin scale inhibitor is described further down below.

In a preferred embodiment, the oxidized sulfonated lignin scale inhibitor is an oxidized lignosulfonate. This means that the oxidized sulfonated lignin scale inhibitor is preferably prepared by oxidizing lignosulfonate as obtained from sulfite pulping. Since lignosulfonate is typically obtained as a by-product in the paper industry, this renders the oxidized sulfonated lignin scale inhibitor particularly environmentally friendly and cost efficient.

Preferably, the carbon atoms of the -COOH groups were already contained in the native lignin from which the oxidized sulfonated lignin scale inhibitor is derived. This means that no additional moieties are grafted onto the lignin backbone for introducing the -COOH groups.

As noted above, the inventors of the present invention have found out that sulfonated lignins, in particular lignosulfonates, are efficient scale inhibitors if the amount of -COOH groups is above 4 wt.% and, at the same time, the amount of methoxy groups is below 6 wt.%, both based on the total weight of the modified lignin. In particular, it has been found that an amount of greater than 4 wt.% -COOH groups alone is not sufficient if the amount of methoxy groups is not in the desired range, an vice versa. Thus, it is a combination of the amounts of -COOH and methoxy groups what leads to the high efficiency of the oxidized sulfonated lignin of the present invention.

In a preferred embodiment, the amount of -COOH groups is equal to or greater than 5.0 wt.%, preferably greater than 5.0 wt.%, based on the total weight of the oxidized sulfonated lignin. In a further preferred embodiment, the amount of -COOH groups is equal to or greater than 6.0 wt.%, preferably greater than 6.0 wt.%, based on the total weight of the oxidized sulfonated lignin.

As regards the amount of the methoxy groups, it is preferred that the same is equal to or less than 5.0 wt.%, preferably less than 5.0 wt.%, based on the total weight of the oxidized sulfonated lignin. Further preferably, the amount of methoxy groups is equal to or less than 4.0 wt.%, preferably less than 4.0 wt.%, based on the total weight of the oxidized sulfonated lignin.

In a preferred embodiment, the amount of -COOH groups is more than 4.0 wt.% and the amount of methoxy groups is equal to or less than 5.0 wt.%.

In another preferred embodiment, the amount of -COOH groups is more than 4.0 wt.% and the amount of methoxy groups is less than 5.0 wt.%.

In another preferred embodiment, the amount of -COOH groups is more than 4.0 wt.% and the amount of methoxy groups is equal to or less than 4.0 wt.%.

In another preferred embodiment, the amount of -COOH groups is more than 4.0 wt.% and the amount of methoxy groups is less than 4.0 wt.%.

In another preferred embodiment, the amount of -COOH groups is equal to or more than 5.0 wt.% and the amount of methoxy groups is less than 6.0 wt.%.

In another preferred embodiment, the amount of -COOH groups is equal to or more than 5.0 wt.% and the amount of methoxy groups is equal to or less than 5.0 wt.%.

In another preferred embodiment, the amount of -COOH groups is equal to or more than 5.0 wt.% and the amount of methoxy groups is less than 5.0 wt.%.

In another preferred embodiment, the amount of -COOH groups is equal to or more than 5.0 wt.% and the amount of methoxy groups is equal to or less than 4.0 wt.%.

In another preferred embodiment, the amount of -COOH groups is equal to or more than 5.0 wt.% and the amount of methoxy groups is less than 4.0 wt.%.

In another preferred embodiment, the amount of -COOH groups is more than 5.0 wt.% and the amount of methoxy groups is less than 6.0 wt.%.

In another preferred embodiment, the amount of -COOH groups is more than 5.0 wt.% and the amount of methoxy groups is equal to or less than 5.0 wt.%.

In another preferred embodiment, the amount of -COOH groups is more than 5.0 wt.% and the amount of methoxy groups is less than 5.0 wt.%.

In another preferred embodiment, the amount of -COOH groups is more than 5.0 wt.% and the amount of methoxy groups is equal to or less than 4.0 wt.%.

In another preferred embodiment, the amount of -COOH groups is more than 5.0 wt.% and the amount of methoxy groups is less than 4.0 wt.%.

In another preferred embodiment, the amount of -COOH groups is equal to or more than 6.0 wt.% and the amount of methoxy groups is less than 6.0 wt.%.

In another preferred embodiment, the amount of -COOH groups is equal to or more than 6.0 wt.% and the amount of methoxy groups is equal to or less than 5.0 wt.%.

In another preferred embodiment, the amount of -COOH groups is equal to or more than 6.0 wt.% and the amount of methoxy groups is less than 5.0 wt.%.

In another preferred embodiment, the amount of -COOH groups is equal to or more than 6.0 wt.% and the amount of methoxy groups is equal to or less than 4.0 wt.%.

In another preferred embodiment, the amount of -COOH groups is equal to or more than 6.0 wt.% and the amount of methoxy groups is less than 4.0 wt.%.

In another preferred embodiment, the amount of -COOH groups is more than 6.0 wt.% and the amount of methoxy groups is less than 6.0 wt.%.

In another preferred embodiment, the amount of -COOH groups is more than 6.0 wt.% and the amount of methoxy groups is equal to or less than 5.0 wt.%.

In another preferred embodiment, the amount of -COOH groups is more than 6.0 wt.% and the amount of methoxy groups is less than 5.0 wt.%.

In another preferred embodiment, the amount of -COOH groups is more than 6.0 wt.% and the amount of methoxy groups is equal to or less than 4.0 wt.%.

In another preferred embodiment, the amount of -COOH groups is more than 6.0 wt.% and the amount of methoxy groups is less than 4.0 wt.%.

It has been found that an amount of equal to or more than 5.0 wt.% -COOH groups in combination with an amount of equal to or less than 5.0 wt.% methoxy groups leads to a particularly good efficiency (FIC = 5 ppm).

Moreover, it has been found that the organic sulfur content (i.e. the amount of sulfur which is associated with the sulfonate groups attached to the lignin, i.e. the degree of sulfonation) also plays a role, in particular with respect to the calcium compatibility of the oxidized sulfonated lignin scale inhibitor. Specifically, it has been found that an amount of organic sulfur of greater than 0.5 wt.% is advantageous. Preferably, the amount of organic sulfur is greater than 1 wt.%, more preferably greater than 3 wt.%. The wt.% are based on the total weight of the oxidized sulfonated lignin scale inhibitor. In particular, it has been found that an amount of organic sulfur of greater than 3 wt.%, in combination with the required amounts of -COOH and methoxy groups, leads to a particularly good calcium compatibility.

It has surprisingly been found that the oxidized sulfonated lignin scale inhibitor of the present invention has an efficiency in the same range as commonly used scale inhibitors, while having a number of further advantages, in particular PLONOR-conformability and high temperature and calcium tolerance while being biobased. This is summarized in Table 1 below:

Table 1: The sulfonated lignins of the invention compared to some common scale inhibitors.

| Inhibitor type | PLONOR | Temp tolerance | Ca tolerance | Biobased |
|---|---|---|---|---|
| Polyacrylate | No | Med | Low | No |
| Sulfonate-carboxylate copolymer | No | Med | Med | No |
| Polyvinyl sulfonate | No | High | High | No |
| Organophosphonate | No | Med | Med | No |
| Polyaspartate | No | Low | High | No |
| Carboxymethyl inulin | Yes | Low | Med | Yes |
| Polyitaconic acid | Yes | Low | Low | Yes |
| *Oxidized sulfonated lignin of the present invention* | *Yes* | *High* | *High* | *Yes* |

Table 2: Performance of common oilfield scale inhibitors tested in the same way as the sulfonated lignins in Table 6 for comparison.

| Scale inhibitor | Performance |
|---|---|
| Acrylic-Maleic copolymer | FIC = 5 ppm |
| Aminotris(methylenephosphonic acid) | FIC = 10 ppm |
| Polyvinyl sulfonic acid | FIC = 2 ppm |

According to a preferred embodiment, the oxidized sulfonated lignin scale inhibitor of the present invention has a fail inhibitor concentration (FIC) of less than 50 ppm, preferably less than 40 ppm, more preferably less than 30 ppm, more preferably less than 20 ppm, more preferably less than 10 ppm, more preferably equal or less than 5 ppm, more preferably less than 5 ppm. The FIC can be determined according to the scale rig test as described further down below.

As noted above, an earlier approach for imparting scale-inhibiting properties to lignosulfonate has been to simply graft synthetic moieties known to inhibit scale, for example acrylic acid and polyacrylate, to the lignosulfonate. However, it is doubtful whether such complex mixtures of petroleum-based and lignosulfonate-based materials qualify as PLONOR-acceptable. Further, such compounds are associated with rather high production costs, which make them economically unsuitable for commercial large-scale applications, such as in the oil and gas industry. This drawback is overcome by the present invention. Thus, it is preferred that the oxidized sulfonated lignin scale inhibitor does not comprise acrylic acid moieties grafted thereto or polyacrylate moieties grafted thereto.

Further, as noted above, during the oxidation reaction, a decomposition of the lignin derivative into smaller fragments is preferably avoided. Accordingly, the oxidized sulfonated lignin scale inhibitor of the present invention preferably has a number average molecular weight of 1000-100000 g/mol, preferably 5000-60000 g/mol, more preferably 15000-40000 g/mol. The number average molecular weight can be determined by using gel permeation chromatography, as known to the skilled person.

Moreover, it has been found that the oxidized sulfonated lignin scale inhibitor of the present invention has a very good thermal stability. In particular, the oxidized sulfonated lignin scale inhibitor of the present invention has been found to be stable under prolonged high temperature conditions. Thus, in a preferred embodiment, the oxidized sulfonated lignin scale inhibitor of the present invention has a fail inhibitor concentration (FIC) of less than 50 ppm, preferably less than 40 ppm, more preferably less than 30 ppm, more preferably less than 20 ppm, more preferably less than 10 ppm, more preferably less than 5 ppm, after storage for 14 days at 130 °C.

The advantageous properties of the oxidized sulfonated lignin scale inhibitor render the same particularly suitable for oilfield applications, in particular for inhibiting the formation of calcite and barite scale. Thus, according to a preferred embodiment, the oxidized sulfonated lignin scale inhibitor is for inhibiting the formation of calcite and barite scale in oilfield applications.

The present invention further relates to the use of the oxidized sulfonated lignin scale inhibitor of the present invention for inhibiting the formation of scale in oilfield applications.

Preferably, the oxidized sulfonated lignin scale inhibitor is used in oilfield applications for inhibiting the formation of calcite and barite scale.

Moreover, the present invention relates to a method for inhibiting the formation of scale in oilfield applications. The method comprises the use of the oxidized sulfonated lignin scale inhibitor of the present invention.

Preferably, the oxidized sulfonated lignin scale inhibitor is added to stimulation fluid, completion fluid, or for squeeze treatment.

Furthermore, the present invention relates to a method for preparing the oxidized sulfonated lignin scale inhibitor of the present invention. The method comprises the following steps: (a1) providing a sulfonated lignin starting material, and (a2) oxidizing the sulfonated lignin starting material with an oxidant, thereby obtaining the oxidized sulfonated lignin scale inhibitor.

Preferably, the sulfonated lignin starting material is lignosulfonate, preferably lignosulfonate as obtained from sulfite pulping.

Preferably, oxidation step (a2) is performed as a multi-step oxidation using several oxidants.

In this multi-step oxidation, one of the oxidants is preferably ozone or molecular oxygen.

Also preferably, one of the oxidants used in the multi-step oxidation is hydrogen peroxide.

Also preferably, one of the oxidants used in the multi-step oxidation is sodium hydroxide.

Preferably, the multi-step oxidation method is characterized in that one of the oxidants is sodium hydroxide and another one of the oxidants is ozone or molecular oxygen.

Preferably, the multi-step oxidation method is characterized in that it is a two-step oxidation method and comprises the sequential application of two oxidants. Preferably, one of the two oxidants is sodium hydroxide and the other one of the two oxidants is ozone. Preferably, sodium hydroxide is applied first.

According to another preferred embodiment, the multi-step oxidation is a three-step oxidation and comprises the sequential application of three oxidants. Preferably, one of the three oxidants is sodium hydroxide and another one of the three oxidants is ozone. Further preferably, one of the three oxidants is sodium hydroxide, another one of the three oxidants is ozone, and another one of the three oxidants is hydrogen peroxide. Further preferably, sodium hydroxide is applied first, ozone is applied second, and hydrogen peroxide is applied third.

According to another preferred embodiment, the oxidant is ozone, molecular oxygen or a peracid, wherein the peracid is preferably selected from peracetic acid, perpropionic acid, and perbenzoic acid. Further preferably, the peracid is peracetic acid.

In line with the above disclosure, the method preferably does not comprise a step of grafting acrylic acid or polyacrylate moieties to the lignosulfonate.

Further, the method is preferably performed in a way that a decomposition of the sulfonated lignin starting material is avoided. Preferably, the number average molecular weight of the oxidized lignosulfonate scale inhibitor is at least 10%, preferably at least 50%, more preferably at least 70%, even more preferably at least 80% of the number average molecular weight of the sulfonated lignin starting material.

Furthermore, the present invention relates to an oxidized sulfonated lignin scale inhibitor, obtained by the method according to the present invention.

The present invention is now further described by means of the following items:

Item 1. Oxidized sulfonated lignin scale inhibitor, characterized by:

- a -COOH group content of more than 4.0 wt.%, based on the total weight of the oxidized sulfonated lignin, wherein the -COOH group content is determined by phosphorylation of the - COOH groups and subsequent $^{31}$P-NMR as described in the description, and
- a methoxy group content of less than 6.0 wt.%, based on the total weight of the oxidized sulfonated lignin, wherein the methoxy group content is determined as described in the description.

Item 2. Oxidized sulfonated lignin scale inhibitor according to Item 1, wherein said oxidized sulfonated lignin scale inhibitor is an oxidized lignosulfonate.

Item 3. Oxidized sulfonated lignin scale inhibitor according to Item 1 or 2, wherein the carbon atoms of the -COOH groups were already contained in the native lignin from which the oxidized sulfonated lignin scale inhibitor is derived.

Item 4. Oxidized sulfonated lignin scale inhibitor according to any one of the preceding Items, wherein the amount of -COOH groups is equal to or greater than 5.0 wt.%, preferably greater than 5.0 wt.%.

Item 5. Oxidized sulfonated lignin scale inhibitor according to any one of the preceding Items, wherein the amount of -COOH groups is equal to or greater than 6.0 wt.%, preferably greater than 6.0 wt.%.

Item 6.Oxidized sulfonated lignin scale inhibitor according to any one of the preceding Items, wherein the amount of methoxy groups is equal to or less than 5.0 wt.%, preferably less than 5.0 wt.%.

Item 7. Oxidized sulfonated lignin scale inhibitor according to any one of the preceding Items, wherein the amount of methoxy groups is equal to or less than 4.0 wt.%, preferably less than 4.0 wt.%.

Item 8. Oxidized sulfonated lignin scale inhibitor according to any one of the preceding Items, wherein the amount of -COOH groups is more than 4.0 wt.% and the amount of methoxy groups is equal to or less than 5.0 wt.%.

Item 9. Oxidized sulfonated lignin scale inhibitor according to any one of the preceding Items, wherein the amount of -COOH groups is more than 4.0 wt.% and the amount of methoxy groups is less than 5.0 wt.%.

Item 10. Oxidized sulfonated lignin scale inhibitor according to any one of the preceding Items, wherein the amount of -COOH groups is more than 4.0 wt.% and the amount of methoxy groups is equal to or less than 4.0 wt.%.

Item 11. Oxidized sulfonated lignin scale inhibitor according to any one of the preceding Items, wherein the amount of -COOH groups is more than 4.0 wt.% and the amount of methoxy groups is less than 4.0 wt.%.

Item 12. Oxidized sulfonated lignin scale inhibitor according to any one of the preceding Items, wherein the amount of -COOH groups is equal to or more than 5.0 wt.% and the amount of methoxy groups is less than 6.0 wt.%.

Item 13. Oxidized sulfonated lignin scale inhibitor according to any one of the preceding Items, wherein the amount of -COOH groups is equal to or more than 5.0 wt.% and the amount of methoxy groups is equal to or less than 5.0 wt.%.

Item 14. Oxidized sulfonated lignin scale inhibitor according to any one of the preceding Items, wherein the amount of -COOH groups is equal to or more than 5.0 wt.% and the amount of methoxy groups is less than 5.0 wt.%.

Item 15. Oxidized sulfonated lignin scale inhibitor according to any one of the preceding Items, wherein the amount of -COOH groups is equal to or more than 5.0 wt.% and the amount of methoxy groups is equal to or less than 4.0 wt.%.

Item 16. Oxidized sulfonated lignin scale inhibitor according to any one of the preceding Items, wherein the amount of -COOH groups is equal to or more than 5.0 wt.% and the amount of methoxy groups is less than 4.0 wt.%.

Item 17. Oxidized sulfonated lignin scale inhibitor according to any one of the preceding Items, wherein the amount of -COOH groups is more than 5.0 wt.% and the amount of methoxy groups is less than 6.0 wt.%.

Item 18. Oxidized sulfonated lignin scale inhibitor according to any one of the preceding Items, wherein the amount of -COOH groups is more than 5.0 wt.% and the amount of methoxy groups is equal to or less than 5.0 wt.%.

Item 19. Oxidized sulfonated lignin scale inhibitor according to any one of the preceding Items, wherein the amount of -COOH groups is more than 5.0 wt.% and the amount of methoxy groups is less than 5.0 wt.%.

Item 20. Oxidized sulfonated lignin scale inhibitor according to any one of the preceding Items, wherein the amount of -COOH groups is more than 5.0 wt.% and the amount of methoxy groups is equal to or less than 4.0 wt.%.

Item 21. Oxidized sulfonated lignin scale inhibitor according to any one of the preceding Items, wherein the amount of -COOH groups is more than 5.0 wt.% and the amount of methoxy groups is less than 4.0 wt.%.

Item 22. Oxidized sulfonated lignin scale inhibitor according to any one of the preceding Items, wherein the amount of -COOH groups is equal to or more than 6.0 wt.% and the amount of methoxy groups is less than 6.0 wt.%.

Item 23. Oxidized sulfonated lignin scale inhibitor according to any one of the preceding Items, wherein the amount of -COOH groups is equal to or more than 6.0 wt.% and the amount of methoxy groups is equal to or less than 5.0 wt.%.

Item 24. Oxidized sulfonated lignin scale inhibitor according to any one of the preceding Items, wherein the amount of -COOH groups is equal to or more than 6.0 wt.% and the amount of methoxy groups is less than 5.0 wt.%.

Item 25. Oxidized sulfonated lignin scale inhibitor according to any one of the preceding Items, wherein the amount of -COOH groups is equal to or more than 6.0 wt.% and the amount of methoxy groups is equal to or less than 4.0 wt.%.

Item 26. Oxidized sulfonated lignin scale inhibitor according to any one of the preceding Items, wherein the amount of -COOH groups is equal to or more than 6.0 wt.% and the amount of methoxy groups is less than 4.0 wt.%.

Item 27. Oxidized sulfonated lignin scale inhibitor according to any one of the preceding Items, wherein the amount of -COOH groups is more than 6.0 wt.% and the amount of methoxy groups is less than 6.0 wt.%.

Item 28. Oxidized sulfonated lignin scale inhibitor according to any one of the preceding Items, wherein the amount of -COOH groups is more than 6.0 wt.% and the amount of methoxy groups is equal to or less than 5.0 wt.%.

Item 29. Oxidized sulfonated lignin scale inhibitor according to any one of the preceding Items, wherein the amount of -COOH groups is more than 6.0 wt.% and the amount of methoxy groups is less than 5.0 wt.%.

Item 30. Oxidized sulfonated lignin scale inhibitor according to any one of the preceding Items, wherein the amount of -COOH groups is more than 6.0 wt.% and the amount of methoxy groups is equal to or less than 4.0 wt.%.

Item 31. Oxidized sulfonated lignin scale inhibitor according to any one of the preceding Items, wherein the amount of -COOH groups is more than 6.0 wt.% and the amount of methoxy groups is less than 4.0 wt.%.

Item 32. Oxidized sulfonated lignin scale inhibitor according to any one of the preceding Items, having an organic sulfur content of greater than 0.5 wt.%, based on the total weight of the oxidized sulfonated lignin, wherein the organic sulfur content is determined as set out in the description.

Item 33. Oxidized sulfonated lignin scale inhibitor according to Item 32, wherein the organic sulfur content is greater than 1 wt.%, preferably greater than 3 wt.%.

Item 34. Oxidized sulfonated lignin scale inhibitor according to any one of the preceding Items, having a fail inhibitor concentration (FIC) of less than 50 ppm, preferably less than 40 ppm, more preferably less than 30 ppm, more preferably less than 20 ppm, more preferably less than 10 ppm, more preferably equal to or less than 5 ppm, more preferably less than 5 ppm, wherein the FIC is determined according to the scale rig test as described in the description.

Item 35. Oxidized sulfonated lignin scale inhibitor according to any one of the preceding Items, wherein the oxidized sulfonated lignin scale inhibitor does not comprise acrylic acid moieties grafted thereto or polyacrylate moieties grafted thereto.

Item 36. Oxidized sulfonated lignin scale inhibitor according to any one of the preceding Items, having a number average molecular weight of 1000-100000 g/mol, preferably 5000-60000 g/mol, more preferably 15000-40000 g/mol.

Item 37. Oxidized sulfonated lignin scale inhibitor according to any one of the preceding Items, having a fail inhibitor concentration (FIC) of less than 50 ppm, preferably less than 40 ppm, more preferably less than 30 ppm, more preferably less than 20 ppm, more preferably less than 10 ppm, more preferably less than 5 ppm, after storage for 14 days at 130 °C, wherein the FIC is determined according to the scale rig test as described in the description

Item 38. Oxidized sulfonated lignin scale inhibitor according to any one of the preceding Items, wherein the oxidized sulfonated lignin scale inhibitor is for inhibiting the formation of calcite and barite scale in oilfield applications.

Item 39. Use of an oxidized sulfonated lignin scale inhibitor according to any one of Items 1-38 for inhibiting the formation of scale in oilfield applications.

Item 40. The use according to Item 39, wherein the oxidized sulfonated lignin scale inhibitor is used in oilfield applications for inhibiting the formation of calcite and barite scale.

Item 41. Method for inhibiting the formation of scale in oilfield applications, the method comprising the use of the oxidized sulfonated lignin scale inhibitor according to any one of Items 1-38.

Item 42. The method according to Item 41, wherein the oxidized sulfonated lignin scale inhibitor is added to stimulation fluid, completion fluid, or for squeeze treatment.

Item 43. Method for preparing an oxidized sulfonated lignin scale inhibitor according to any one of Items 1-38, the method comprising the following steps:

(a1) providing a sulfonated lignin starting material,
(a2) oxidizing the sulfonated lignin starting material with an oxidant, thereby obtaining said oxidized sulfonated lignin scale inhibitor.

Item 44. The method according to Item 43, wherein the sulfonated lignin starting material is lignosulfonate, preferably lignosulfonate as obtained from sulfite pulping.

Item 45. The method according to Item 43 or 44, wherein oxidation step (a2) is performed as a multi-step oxidation using several oxidants.

Item 46. The method according to Item 45, wherein the multi-step oxidation is characterized in that one of the oxidants is ozone or molecular oxygen.

Item 47. The method according to Item 45 or 46, wherein the multi-step oxidation is characterized in that one of the oxidants is hydrogen peroxide.

Item 48. The method according to any one of Items 45-47, wherein the multi-step oxidation is characterized in that one of the oxidants is sodium hydroxide.

Item 49. The method according to any one of Items 45-48, wherein the multi-step oxidation is characterized in that one of the oxidants is sodium hydroxide and another one of the oxidants is ozone.

Item 50. The method according to any one of Items 45-49, wherein the multi-step oxidation is characterized in that it is a two-step oxidation method and comprises the sequential application of two oxidants.

Item 51. The method according to Item 50, wherein one of the two oxidants is sodium hydroxide and the other one of the two oxidants is ozone.

Item 52. The method according to Item 51, wherein sodium hydroxide is applied first.

Item 53. The method according to any one of Items 45-49, wherein the multi-step oxidation is characterized in that it is a three-step oxidation method and comprises the sequential application of three oxidants.

Item 54. The method according to Item 53, wherein one of the three oxidants is sodium hydroxide and another one of the three oxidants is ozone.

Item 55. The method according to Item 54, wherein one of the three oxidants is sodium hydroxide, another one of the three oxidants is ozone, and another one of the three oxidants is hydrogen peroxide.

Item 56. The method according to Item 55, wherein sodium hydroxide is applied first, ozone is applied second, and hydrogen peroxide is applied third.

Item 57. The method according to any one of Items 43 or 44, wherein the oxidant is ozone, molecular oxygen or a peracid, wherein the peracid is preferably selected from peracetic acid, perpropionic acid, and perbenzoic acid.

Item 58. The method according to Item 57, wherein the peracid is peracetic acid.

Item 59. The method according to any one of Items 43-58, wherein the method does not comprise a step of grafting acrylic acid or polyacrylate moieties to the lignosulfonate.

Item 60. The method according to any one of Items 43-59, wherein the number average molecular weight of the oxidized lignosulfonate scale inhibitor is at least 10%, preferably at least 50%, more preferably at least 70%, even more preferably at least 80% of the number average molecular weight of the sulfonated lignin starting material.

Item 61. Oxidized sulfonated lignin scale inhibitor, obtained by the method according to any one of Items 43-60.

## EXAMPLES

### Synthesis of lignosulfonates according to the present invention (sulfonated lignins F and G)

Lignin F: A sodium lignosulfonate produced from commercial spent sulfite liquor was dissolved in water at 30% solid content and reacted with 20% sodium hydroxide in a par reactor at 160°C for 3 hours. The mixture was subsequently oxidized with ozone gas (15% ozone on lignin solids) at 50°C using a laboratory ozone generator and reactor. Finally, the product was treated with 30% aqueous hydrogen peroxide solution (30% peroxide on lignin solids) in a round-bottom flask heated at 66°C.

Lignin G: A sodium lignosulfonate produced from commercial spent sulfite liquor was dissolved in water at 25% solid content and treated with a pre-mixed solution of peracetic acid (peracetic acid composition = hydrogen peroxide dose 40% w/w wrt. dry lignin mass + glacial acetic acid ¼ volume of the total peroxide used + catalytic amount of 50% $H_2SO_4$ solution) at 71° C.

### Scale rig test

The inhibition performance was tested using a high-pressure dynamic scale rig. The scale rig is located at University of Stavanger, Norway and manufactured by PMAC Group, Aberdeen, UK. This is an efficient laboratory method to determine the inhibition efficiency of scale inhibitors against oilfield calcite and barite scales.

The equipment has a main control unit consisting of two pumps that flow aqueous solution at a desired flow rate through a stainless-steel coil (1m long and 1mm of internal diameter). The coil is placed inside an oven which is connected to the main control unit via steel tubing. The main control unit also contains a pH probe and a conductometer to measure pH and conductivity of the mixed aqueous solutions passing through the coil. For the test method developed at University of Stavanger, the test is done at 100°C with a line pressure of about 1200 psi, but the rig is designed to tolerate even higher variations of temperature and pressure.

Figure 2 represents a schematic diagram of the control unit that explains a typical scenario during one tube-blocking test run. Pump 1 injects cation brine aqueous solutions, while pump 2 is responsible to pump four different solutions controlled by valves A, B, C and D. Valve A is responsible for pumping the anion brine aqueous solutions, and valve B injects inhibitors solution (dissolved in anion brine) at a certain flow rate which is then mixed and pumped into the scale coil. Valve A and B have to open and close simultaneously to maintain the flow rate inside the coil. In addition, valve C and D in pump 2 are responsible for injecting the cleaning solutions, basic EDTA solution (pH = 12) and distilled water respectively.

One full run consists of two successive tests, controlled by the automated scale rig:

The first is 'Chemical' where cation and anion brines are mixed with inhibitor solution and being pumped into the scaling coil at a flow rate of 10 mL/min. The test consists of several automated periods, each with a duration of 1 hr. In each test the inhibitor concentration is getting decreased gradually until the rapid tube blocking occurs at a certain inhibitor concentration.

The second one is 'Repeat Chemical' which starts from a stage with inhibitor concentration same as the one that led to rapid scale formation. The initial concentration of the stock inhibitor solution (SLS dissolved in anion brine) is about 200 ppm with a pH of 7.

During the first 'Chemical' stage of the test, the brines and the inhibitor solution are mixed at a certain ratio to obtain a desired inhibitor concentration inside the test coil.

It was started from a 100 ppm initial inhibitor concentration, and then in each hour the automated rig adjusts the flow to have the concentration decreasing gradually (e.g., 50, 20, 10, 5, 2, and 1 ppm) until rapid scale formation was observed, which triggered the cleaning cycle. Concentration which is responsible for rapid scale formation in the test coil is termed as the Fail Inhibitor Concentration (FIC) of the scale inhibitor. Usually this is signaled by a sudden increase in the differential pressure (approx. 10 psi increase from the baseline pressure which stands at 0.4-0.5 psi) across the test coil. According to the test conditions, an inhibitor with a FIC range 2-10 ppm was considered to have excellent to fairly well scale inhibition efficiency.

The synthetic brine used in this study is modelled according to the water produced in Heidrun oilfield, Norway. Formation water was used only for the calcite scale test. The salt compositions for the brines are given in Table 3 below. Before each experiment, the brines, scale inhibitor solutions and the cleaning liquids are freshly prepared and degassed thoroughly to avoid complications during the automated run.

Table 3. Salt composition for brines 1 and 2 for calcite scaling.

| Ion | Conc. (ppm) | Salt | Brine 1 (g/ 3L) | Brine 2 (g/ 3L) |
|---|---|---|---|---|
| $Na^+$ | 39020 | NaCl | 148.77 | 148.77 |
| $Ca^{2+}$ | 2040 | $CaCl_2, 2H_2O$ | 22.45 | |
| $Mg^{2+}$ | 530 | $MgCl_2, 6H_2O$ | 13.30 | |
| $K^+$ | 1090 | KCl | 6.23 | |
| $Ba^{2+}$ | 570 | $BaCl_2, 2H_2O$ | 3.04 | |
| $Sr^{2+}$ | 290 | $SrCl_2. 6H_2O$ | 2.65 | |
| $HCO_3^-$ | 1000 | NaHCOs | | 8.26 |

**Brine compatibility test**

Formation water can have high levels of $Ca^{2+}$ ion which can cause serious problem if the injected scale inhibitor is not compatible with brines. If incompatible, the scale inhibitor itself can precipitate via formation of insoluble $Ca^{2+}$-scale inhibitor complex during the squeeze treatment. It can block the pores of the formation rocks and cause severe formation damage. Therefore, all the scale inhibitors were screened to determine their Ca-tolerance limit.

A simple test method was used to check the initial compatibility of the scale inhibitors with cation brine, especially with Ca ion. Roughly 1 mL of a 1 wt% solution of scale inhibitors in distilled water was mixed with equal volume of cation brine and the resulting solution was heated to 90°C. The solution was later checked for any occurring precipitate or turbidity.

Clear brown solution = compatible

Opaque solution = poor compatibility

Brown precipitates = incompatible

**Temperature stability test**

Temperature stability tests are performed to test whether the scale inhibitors can retain their inhibition performance under reservoir conditions, including squeeze treatments. A 5 wt% solution of scale inhibitor in distilled water equipped with a magnetic stir-bar were placed inside a hard-glass tube fitted with a Teflon stopcock. The solution was then subjected to three repetitive cycles of vacuum-refill (with nitrogen) before finally sealing off under a nitrogen atmosphere. The tube was then placed at an oil bath preheated at 130 °C or 160 °C and maintained at that temperature for 14 or 10 days. Afterwards, the water was evaporated off, and the solid sample was tested in the scale rig. The inhibition performance of the thermally aged inhibitor is compared to the non-aged ones to determine whether they are stable when exposed to high-temperature conditions.

**Methoxy group analysis**

Around 30 mg of scale inhibitor were dissolved in 1000 mg deuterated methanol (MeOD-d4) and then Amberlite IR-120 resin is added. The solution is left to stir for at least 30 min and then 620 $\mu$L are transferred to a NMR tube with an automatic pipette. The sample is prepared twice (two parallels and each parallel is run separately and the average result is the final answer as the MeO content). An HSQC experiment is then performed where the methoxy content is calculated against a linearity curve made using an internal methoxy standard. NMR experiments were performed on a Bruker Avance III 500 MHz spectrometer using a selective inverse (SEI) probe for maximum 1H sensitivity. All spectra were recorded in MeOH-d4 at 300 K. $^1$H-$^{13}$C HSQC spectra were optimized for the methoxy groups (1JC,H coupling constant of 145 Hz ) and recorded in the phase-sensitive mode using echo-antiecho with the standard Bruker pulse sequence. 200 t1 experiments of 1k real data points (24 scans and 16 dummy scans) were recorded with a relaxation delay of 3 s, spectral width 9 ppm for proton and 130 ppm for carbon. Total experiment time 4.5 hours. A squared sine window function was employed in both directions after zerofilling to a matrix of 1k*1k data points. The spectra were phase-corrected in the F2-direction, baseline-corrected in both F1 and F2 direction using the automatic 5th degree polynominal function, and the sum projection calculated for the F1-direction. The amount of methoxy groups was determined from the signal intensity in the 53-58 ppm region.

**Organic sulfur analysis**

The amount of "organic" sulfur (org. S), i.e. the amount of sulfur which is associated with the sulfonate groups attached to the lignin, i.e. the degree of sulfonation, is determined based on the difference between total sulfur %S(tot) and the inorganic sulfur %S(inorg) using the following relation:

$$\%S(org) = \%S(tot) - \% S(inorg)$$

Total sulfur is determined with an element analyzer, for instance a ThermoQuest NCS 2500. Appropriate sample amounts (for instance 1-2 mg) are placed in tin capsules with a suitable catalyst (for instance Vanadium pentoxide). Total sulfur in the sample is then quantified using the 2,5-Bis(5-tert-butyl-2-benzo-oxazol-2-yl)thiophene (BBOT) standard, or other suitable sulfur standards. The samples are combusted at 1400 °C and all sulfur is oxidized to $SO_2$ and quantified.

Inorganic sulfur is determined by measuring sulfate in oxidized samples using ion chromatography with conductivity detection (Dionex instrument using an IonPac AS11 - HC column with 13 mM OH- eluent). 30 mg samples are weighed into 50-ml volumetric flasks. 10 ml of 0.5 % NaOH and 5 ml of 3 % $H_2O_2$ are added to oxidize sulfurous inorganic anions into sulfate. Samples are then left 12-16 h to give time to react. Milli-Q water is added and pH neutralized by adding 2 ml of 5 % $CH_3COOH$ and diluted to the mark with Milli-Q water. Sulfate standards are prepared between 5 mg/L and 80 mg/L. The sulfate content in the oxidized samples is then determined using ion chromatography according to the instrument manual.

**-COOH determination using P-NMR**

Characterizing the molecular structure of lignosulfonates is generally challenging due to unknown impurities that occur in lignosulfonates. Specifically, low molecular weight carboxylic acids such as formic acid and acetic acid, which are formed from wood sugars and are often present in lignosulfonates, can perturb -COOH measurements.
Thus, a slightly adapted phosphorous NMR (P-NMR) method developed originally by Argyropoulos, D.S.;

Abacherli, A.; Rincón, A.G.; Arx, U.V. [Quantitative 31P nuclear magnetic resonance (NMR) spectra of lignin. In Analytical Methods for Lignin Characterisation; International Lignin Institute: Lausanne, Switzerland, 2009] to quantify the density of -COOH groups on the lignin backbone was used.

In particular, the method involves a purification step to remove low molecular weight carboxylic acid impurities (e.g. formic, acetic acid), and then measuring the -COOH group density on the lignin polymer using a phosphorylation reagent according to Argyropoulos et al., using a phosphorylation reagent and $^{31}$P-NMR.

Chemicals:

Internal Standard: Cholesterol 99%

Phosphorylation reagent: 2-Chloro-4,4,5,5-tetra-methyl-1,3,2-dioxa-phospholane 95%

Deuterated solvent: CDCl$_3$

Solvents: Pyridine Anhydrous 99,8% and N,N-Dimethylformamide anhydrous 99,8%

Drying agent: Molecular sieves 13X, Beads, 8-12 mesh

Resin: Amberlite IR120 H+ form

The analysis takes place in two days:

Day 1:

A glass pipette is filled with Amberlite. The resin is then rinsed with de-ionized water twice by eluting 2 x 1 mL through the pipette.

The sample (200 mg) is weighed in a glass vial followed by de-ionized water (3 mL) and then it is left to stir for ca 10 min. The resulting solution is then filtered through the Amberlite filled glass pipette and the filtrate is collected in a round glass flask. The resin is then rinsed with water twice with 2 x 1 mL and also collected in the flask. The filtered sample is then frozen and freeze-dried overnight.

The phosphorylation reaction is highly sensitive to water and all reagents and components have to be dry. Hamilton syringes are used for the addition of the solvents in the reaction mixture and therefore have to be completely dry. In a glass beaker, molecular sieves are washed in pure acetone and then dried in the oven (105 °C) overnight. They will be used for the drying of the solvents in day 2.

Day 2:

A solvent mix of N,N-Dimethylformamide (DMF) with pyridine (1:1) is made in a glass vial containing dried molecular sieves. The vial is sealed to avoid humidity.

Pyridine is also added in another glass vial containing dried sieves and the vial is sealed. This will be used to make a solution of 40 mg/mL of cholesterol (internal standard) in the dried pyridine.

A dry solution of the deuterated solvent CDCl$_3$ is also prepared by adding the deuterated chloroform in a glass vial with molecular sieves and the vial is sealed. Then, in a 2 mL glass vial, the dry CDCl$_3$ (400 μL) is transferred followed by the phosphorylation reagent 2-Chloro-4,4,5,5-tetra-methyl-1,3,2-dioxa-phospholane (100 μL).

The freeze-dried sample (30 mg ± 3 mg) is added in a 2 mL glass vial, followed by a magnetic stirrer, the solvent mixture of DMF:pyridine (1:1) (100 μL) and the mixture is left to stir for 30 min. Next, the cholesterol solution (100 μL) is added in the reaction mixture and it is left to stir for 15-30 min more. Last, the freshly made solution of the derivatization reagent in CDCl$_3$ (500 μL) is added dropwise and the reaction mixture is left to stir in 1h prior to NMR analysis.

NMR experiment:

The $^{31}$P NMR experiment is run with the BBO probe at 300 K. The NMR experiment settings are the following for a 500 MHz Avance III Bruker instrument:

Table 4

| Parameters | Value |
|---|---|
| P-31 frequency | 202.4867 Hz |
| Pulseprogram | zgig |
| Relaxation delay | 15 sec |
| Number of scans | 128 |
| Number of dummy scans | 4 |
| Sweepwidth | 70 ppm |
| Offset | 150 ppm |
| Acquisition time | 1.15 sec |
| FID resolution | 0.43 Hz |
| Temperature | 300 K |

Once the fid is acquired and fourier transformed, the phase of the frequency domain spectrum is corrected manually (.ph) followed by apodization-fourier transformation-automatic phase correction (efp) and finally base correction (abs). Calibration of the spectrum is done by using the sharp peak of the reaction's by-product between the phosphorylation reagent and water at 132.20 ppm. The cholesterol's peak at 144.8 ppm is integrated first between 145.0-144.4 ppm and calibrated at 1. The other signals are then integrated as follows:

Table 5

| Chemical shift δ areas (ppm) | OH type groups |
|---|---|
| 150.8-145.0 | Aliphatic |
| 144.3-140.2 | Condensed phenolic |
| 140.2-138.4 | Guaiacyl phenolic |
| 138.4-136.9 | *p*-Hydroxyl phenolic |
| 135.6-133.7 | Carboxylic acid |

The concentration (mmol OH/g sample) of each type of OH group is done by following the formula:

$$\text{mmol of the functional OH group/g sample} = \frac{C*A*IS*P}{M*L}$$

C: concentration of the internal standard (mg/mL)

A: Area of the functional OH group (when the integral of the cholesterol peak is calibrated at 1)

IS: Volume of the internal standard solution in pyridine added (0.1 mL)

M: Molecular weight of the internal standard (386.65 g/mol)

L: Weight of the freeze-dried sample added in the vial (g)

P: Purity of the internal standard (0.99)

The mass of -COOH groups on the lignin polymer can then be calculated using the molecular weight of a -COOH functional group (45.0174 g/mol), and the wt.% based on the total weight of the oxidized sulfonated lignin can be calculated.

**Results**

The inventors of the present invention have studied the scale inhibiting performance and calcium compatibility of a range of sulfonated lignins with varying character.

Sulfonated lignins A and B are lignosulfonates produced from spent sulfite liquor raw material without further modification.

Sulfonated lignins C and D are alkali lignosulfonates produced in accordance with the hydrothermal caustic treatment described in the prior art mentioned above (see US 3,849,328 and US 2,505,457, respectively)
Sulfonated lignin E was an oxidized lignosulfonate as described in WO 2021/165298.

Sulfonated lignins F and G are according to the present invention and have been prepared as set out above.

Laboratory methods for determining the performance of scale inhibitors must mimic the industrial conditions as closely as possible. For oilfield applications, high-pressure dynamic tube-blocking scale test rigs allow different scale inhibitors to be directly compared under process-relevant conditions. These rigs are used as standard in the oilfield industry, replicating specific scale forming conditions by programming temperature, pressure, brine composition, and flow. The performance of a scale inhibitor is expressed as the fail inhibitor concentration (FIC). The results are shown in Table 6 below:

Table 6: performance and molecular character of a selected range of lignosulfonates tested.

| Sulfonated lignin | Methoxy (%) | COOH (%) | Organic Sulfur (%) | FIC (ppm) | Calcium compatibility |
|---|---|---|---|---|---|
| A | 9 | 1 | 6 | >100 | Good |
| B | 11 | 1 | 6 | >100 | Good |
| C | 9 | 6 | 2 | 50 | Poor |
| D | 8 | 9 | 1 | 50 | Poor |
| E | 5 | 3 | 6 | 50 | Good |
| F | 3 | 11 | 4 | 5 | Good |
| G | 5 | 5 | 6 | 5 | Good |

To be considered commercially relevant, sulfonated lignin scale inhibitors should have a FIC value comparable to or better than commercial synthetic scale inhibitors (see Table 2 above) and have good compatibility with the calcium salt brine. The data in Table 6 shows that only sulfonated lignins with a combination of both high -COOH content and low methoxy group content performed well enough to be considered commercially relevant (lignosulfonates F and G). Unmodified lignosulfonates (A and B) and the hydrothermal alkali treated lignosulfonates of the prior art (C and D) did not have this combination of attributes and did not perform well enough to be considered relevant for oilfield scale inhibition application. Oxidized lignosulfonate E had not been oxidized severely enough and did not have the advantageous combination of attributes and did not perform well enough to be considered relevant for oilfield scale inhibition application.

Lignosulfonate F was further tested for thermal stability (Table 7) and found to be stable under prolonged high temperature conditions:

Table 7: Performance of lignosulfonate F after thermal treatment

| Sulfonated lignin | FIC before thermal treatment* | FIC after 14 days at 130 °C* | FIC after 10 days at 160 °C* |
|---|---|---|---|
| F | 5 ppm | 5 ppm | 10 ppm |
| * Determined according to the scale rig test described below. | | | |

**Claims**

1. Oxidized sulfonated lignin scale inhibitor, **characterized by**:

   • a -COOH group content of more than 4.0 wt.%, based on the total weight of the oxidized sulfonated lignin, wherein the -COOH group content is determined by phosphorylation of the - COOH groups and subsequent $^{31}$P-NMR as described in the description, and

• a methoxy group content of less than 6.0 wt.%, based on the total weight of the oxidized sulfonated lignin, wherein the methoxy group content is determined by means of NMR experiments as described in the description.

2. Oxidized sulfonated lignin scale inhibitor according to claim 1, wherein said oxidized sulfonated lignin scale inhibitor is an oxidized lignosulfonate.

3. Oxidized sulfonated lignin scale inhibitor according to claim 1 or 2, wherein the carbon atoms of the -COOH groups were already contained in the native lignin from which the oxidized sulfonated lignin scale inhibitor is derived.

4. Oxidized sulfonated lignin scale inhibitor according to any one of the preceding claims, wherein the amount of -COOH groups is equal to or greater than 5.0 wt.%, preferably greater than 5.0 wt.%.

5. Oxidized sulfonated lignin scale inhibitor according to any one of the preceding claims, wherein the amount of -COOH groups is equal to or greater than 6.0 wt.%, preferably greater than 6.0 wt.%.

6. Oxidized sulfonated lignin scale inhibitor according to any one of the preceding claims, wherein the amount of methoxy groups is equal to or less than 5.0 wt.%, preferably less than 5.0 wt.%.

7. Oxidized sulfonated lignin scale inhibitor according to any one of the preceding claims, wherein the amount of methoxy groups is equal to or less than 4.0 wt.%, preferably less than 4.0 wt.%.

8. Oxidized sulfonated lignin scale inhibitor according to any one of the preceding claims, having an organic sulfur content of greater than 0.5 wt.%, preferably greater than 1 wt.%, preferably greater than 3 wt.%, based on the total weight of the oxidized sulfonated lignin, wherein the organic sulfur content is determined as set out in the description.

9. Use of an oxidized sulfonated lignin scale inhibitor according to any one of claims 1-8 for inhibiting the formation of scale in oilfield applications, preferably for inhibiting the formation of calcite and barite scale.

10. Method for inhibiting the formation of scale in oilfield applications, the method comprising the use of the oxidized sulfonated lignin scale inhibitor according to any one of claims 1-8, preferably wherein the oxidized sulfonated lignin scale inhibitor is added to stimulation fluid, completion fluid or for squeeze treatment.

11. Method for preparing an oxidized sulfonated lignin scale inhibitor according to any one of claims 1-8, the method comprising the following steps:

(a1) providing a sulfonated lignin starting material,
(a2) oxidizing the sulfonated lignin starting material with an oxidant, thereby obtaining said oxidized sulfonated lignin scale inhibitor.

12. The method according to claim 11, wherein oxidation step (a2) is performed as a multi-step oxidation using several oxidants.

13. The method according to any one of claims 11 and 12, wherein the multi-step oxidation is **characterized in that** it is a two-step oxidation method and comprises the sequential application of two oxidants.

14. The method according to any one of claims 11 and 12, wherein the multi-step oxidation is **characterized in that** it is a three-step oxidation method and comprises the sequential application of three oxidants.

15. Oxidized sulfonated lignin scale inhibitor, obtained by the method according to any one of claims 11-14.

Figure 1

Figure 2

Europäisches
Patentamt

European
Patent Office

Office européen
des brevets

# EUROPEAN SEARCH REPORT

Application Number

EP 23 17 8014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2021/165298 A1 (BORREGAARD AS [NO]) 26 August 2021 (2021-08-26) * claims * * paragraph [0044] – paragraph [0045] * * paragraph [0055] – paragraph [0057] * ----- | 1-15 | INV. C09K8/035 C09K8/528 |
| X | WO 2022/194774 A1 (BORREGAARD AS [NO]) 22 September 2022 (2022-09-22) * paragraph [0005] * * paragraph [0013] * * paragraph [0016] – paragraph [0018] * * paragraph [0020] * * paragraph [0039] * * claims * ----- | 1-15 | |
| A | Gargulak Jerry D. ET AL: "Lignin" In: "KIRK-OTHMER ENCYCLOPEDIA OF CHEMICAL TECHNOLOGY (4th edition)", 15 December 2015 (2015-12-15), Wiley-Interscience, Hoboken, NJ, USA, XP055969095, ISBN: 978-0-471-48494-3 pages 1-26, DOI: 10.1002/0471238961.12090714120914.a01.pub3 , Retrieved from the Internet: URL:http://api.wiley.com/onlinelibrary/tdm /v1/articles/10.1002%2F0471238961.12090714 120914.a01.pub3> * the whole document * ----- | 1-15 | |
| A | US 3 726 850 A (DETROIT W) 10 April 1973 (1973-04-10) * claims * * column 1, line 19 – line 25 * * column 6, line 53 – column 7, line 6 * * column 9, line 24 – line 60 * ----- -/-- | 1-15 | |

TECHNICAL FIELDS SEARCHED (IPC)

C09K

The present search report has been drawn up for all claims

| Place of search | Date of completion of the search | Examiner |
|---|---|---|
| Munich | 27 October 2023 | Zimpfer, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/197624 A1 (ROCKWOOL INT [DK]) 7 October 2021 (2021-10-07) * the whole document * ----- | 1-15 | |
| A | CN 102 604 120 B (UNIV FUZHOU) 20 November 2013 (2013-11-20) * claims * ----- | 11-14 | |

| | | TECHNICAL FIELDS SEARCHED (IPC) |
|---|---|---|

The present search report has been drawn up for all claims

| Place of search | Date of completion of the search | Examiner |
|---|---|---|
| Munich | 27 October 2023 | Zimpfer, Emmanuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 8014

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2023

| Patent document cited in search report | | Publication date | Patent family member(s) | | Publication date |
|---|---|---|---|---|---|
| WO 2021165298 | A1 | 26-08-2021 | CA | 3169210 A1 | 26-08-2021 |
| | | | CN | 115135744 A | 30-09-2022 |
| | | | EP | 4107240 A1 | 28-12-2022 |
| | | | JP | 2023514581 A | 06-04-2023 |
| | | | US | 2023076035 A1 | 09-03-2023 |
| | | | WO | 2021165298 A1 | 26-08-2021 |
| WO 2022194774 | A1 | 22-09-2022 | CA | 3212814 A1 | 22-09-2022 |
| | | | WO | 2022194774 A1 | 22-09-2022 |
| US 3726850 | A | 10-04-1973 | CA | 990715 A | 08-06-1976 |
| | | | US | 3726850 A | 10-04-1973 |
| WO 2021197624 | A1 | 07-10-2021 | NONE | | |
| CN 102604120 | B | 20-11-2013 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2297670 A
- US 3849328 A
- US 2505457 A

- US 20130137799 A
- WO 2021165298 A

**Non-patent literature cited in the description**

- *Ind. Eng. Chem. Res.,* 2006, vol. 45 (16), 5716-5721